# EUROPEAN PATENT SPECIFICATION

(11) **EP 1 135 904 B1**
(45) Date of publication and mention of the grant of the patent: **16.04.2003**
(21) Application number: 99967209.0
(22) Date of filing: 07.12.1999
(51) Int. Cl.: H04L 12/64, H04L 12/56

(54) **SIGNAL PROCESSING SYSTEM AND HYBRID SWITCHING**
SIGNALVERARBEITUNGSSYSTEM UND HYBRIDE VERMITTLUNG
SYSTEME DE TRAITEMENT DES SIGNAUX ET COMMUTATION HYBRIDE

(30) Priority: 08.12.1998 US 207745; 08.12.1998 US 207746
(43) Date of publication of application: 26.09.2001
(60) Divisional application: 02017360.5
(73) Proprietor: Salix Technology, Inc., Wilmington, DE 19801 (US)
(72) Inventor: SIMPKINS, Daniel, S., Bethesda, MD 20817 (US); BRASS, Steve, Westboro, MA 01581 (US); ANSTETT, Joseph, E., III, Gaithersburg, MD 20877 (US); TURNER, Mark, A., Ijamsville, Md 21754 (US); MOSHIRI, Negar, Bethesda, MD 20816 (US); SYMBORSKI, Carl, Olney, MD 20832 (US)
(74) Representative: Walsh, David Patrick
(86) International application number: US9928890
(87) International publication number: WO00035154

(56) References cited:
- EP-A- 0 312 628
- EP-A- 0 345 891
- EP-A- 0 664 657
- GB-A- 2 291 562
- US-A- 5 119 370
- GARD I ET AL: "SUPPORTING STM TRAFFIC WITH ATM - A SWITCH IMPLEMENTATION" PROCEEDINGS OF THE INTERNATIONAL SWITCHING SYMPOSIUM,DE,BERLIN, VDE VERLAG, vol. SYMP. 15, 1995, pages 62-66, XP000495539 ISBN: 3-8007-2093-0

## Description

### BACKGROUND OF THE INVENTION

### Field of the Invention

The invention relates to switching of both telephony data and packet data within a telecommunication switching system, and to converting data between a telephony data format and a packet data format.

### Discussion of the Prior Art

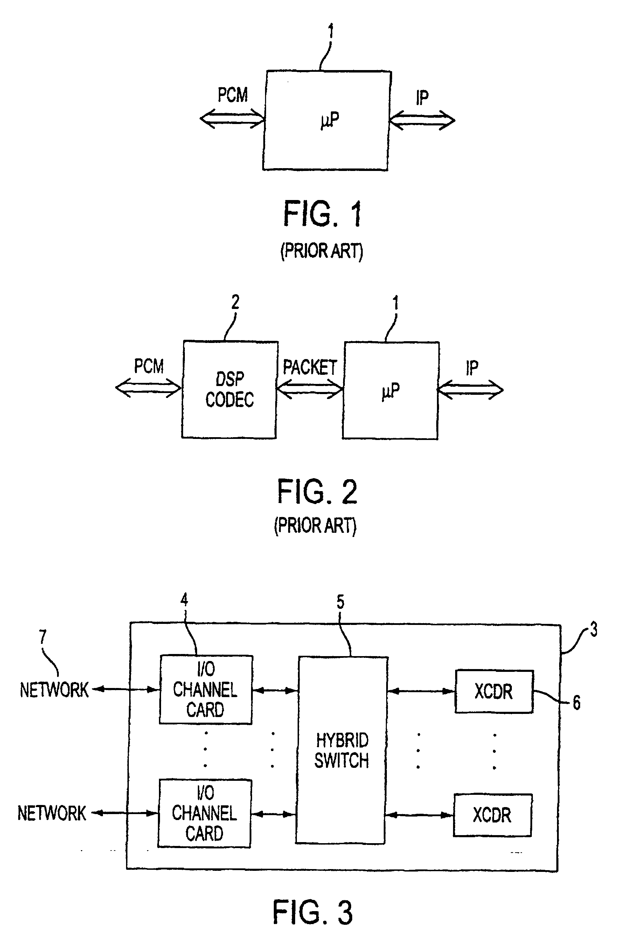

Figure 1 illustrates a plan view of a prior art system for converting data between a telephony data format and a packet data format. A microprocessor 1 running appropriate software converts data from pulse-coded modulation (PCM) data format to Internet protocol (IP) data format. This prior art system is slow and processes a limited number of calls because of all of the functions of converting the data performed in software.

Figure 2 illustrates a plan view of a prior art system for converting data between telephony and packet data formats. The system comprises a microprocessor 1 and a digital signal processor (DSP) 2. The coder-decoder (CODEC) function of the conversion routine is no longer performed by the microprocessor 1, as in Figure 1, and is instead performed by the DSP 2. The DSP 2 converts data between PCM data format and packet data format. Running appropriate software, the microprocessor 1 converts data from packet data format to IP data format. Although this prior art system is faster than the prior art system of Figure 1, this prior art system suffers from an inability to handle a significantly large number of telephone calls. The conventional prior art system is discussed in Eric Baer, "Designing an Embedded Voice over Packet Network Gateway," Communication Systems Design, pp. 21-27, Oct. 1998. Conventional prior art systems offered for sale include: the Alliance Generation-8/80 Board (AG-8/80) by Natural MicroSystems of Framingham, Massachusetts, which can only handle eight voice channels; the Alliance Generation-T1 Board (AG-T1) by Natural MicroSystems of Framingham, Massachusetts, which can only handle twenty-four voice channels; the Fusion IP Telephony Development Platform by Natural MicroSystems of Framingham, Massachusetts, which can only handle eight voice channels; and the VocalTec Telephony Gateway by VocalTec Communications Ltd. of Herzliya, Israel, which can only handle twenty-four voice channels.

As another prior art system, European Patent Application No. 0 664 657 teaches processing in an ATM network all data as ATM data and teaches processing a single packet one-at-a-time in the ATM network, where each packet contains a portion of a telephone call between telephones. In addition, converters are used to convert between STM data and ATM data.

### SUMMARY OF THE INVENTION

An object of the invention is to provide a telecommunication system for interfacing between a telephone network and packet data network.

An object of the invention is to provide a transcoder for converting data between a telephony data format and a packet data format.

An object of the invention is to provide telephony-to-packet data format conversion and packet-to-telephony data format conversion having low jitter and low latency.

An object of the invention is to provide a single transcoder board capable of processing a large number of channels, such as over a thousand channels.

The invention includes an a transcoder for converting data between a telephony data format and a packet data format. The transcoder comprises: a digital logic telephony data engine receiving telephony data for the transcoder and transmitting telephony data for the transcoder, the digital logic telephony data engine including a frame accumulation buffer; a digital logic packet engine receiving packet data for the transcoder and transmitting packet data for the transcoder; a digital signal processing complex coupled to the digital logic telephony data engine and the digital logic packet engine, the digital signal processing complex comprising an array of digital signal processors; and a host processor coupled to the digital logic telephony data engine and the digital logic packet engine, wherein the digital logic telephony data engine, the digital logic packet engine, and the digital signal processing complex perform media channel processing, wherein the host processor performs control channel processing.

The invention includes a system for connecting a telephone network and a packet network. The system comprises: a hybrid switch coupled to the telephone and packet networks switching data between the telephone and packet networks; and at least one transcoder coupled to the hybrid switch converting data between a telephony data format used by the telephone network and a packet data format used by the packet network.

The invention includes a method for converting data between a telephony data format and a packet data format. The method comprises: converting data from the telephony data format to the packet data format; and converting data from the packet data format to the telephony data format.

For the method, converting data from the telephony data format to the packet data format comprises: receiving data in the telephony data format; accumulating in digital logic hardware the data to obtain a telephony data frame; selecting in digital logic hardware a digital signal processor from an array of digital signal processors; passing the telephony data frame to the selected digital signal processor; transcoding in the selected digital signal processor the telephony data frame to obtain a coder-decoder data frame; and encapsulating in the selected digital signal processor the coder-decoder data frame to obtain data in the packet data format.

For the method, converting data from the packet data format to the telephony data format comprises: receiving data in the packet data format; accumulating in digital logic hardware the data to obtain a packet data frame; resequencing in digital logic hardware the packet data frame to obtain a coder-decoder data frame; selecting in digital logic hardware a digital signal processor from an array of digital signal processors; passing the coder-decoder data frame to the selected digital signal processor; decoding in the selected digital signal processor the coder-decoder frame to obtain a telephony data frame; passing the telephony data frame to digital logic hardware; and encapsulating in digital logic hardware the telephony data frame to obtain data in the telephony data format.

Moreover, the above objects and advantages of the invention are illustrative, and not exhaustive, of those which can be achieved by the invention. Thus, these and other objects and advantages of the invention will be apparent from the description herein or can be learned from practicing the invention, both as embodied herein and as modified in view of any variations which may be apparent to those skilled in the art.

### BRIEF DESCRIPTION OF THE DRAWINGS

Embodiments of the invention are explained in greater detail by way of the drawings, where the same reference numerals refer to the same features.

Figure 1 illustrates a plan view of a prior art system for converting data between telephony and packet data formats.

Figure 2 illustrates a plan view of a prior art system for converting data between telephony and packet data formats.

Figure 3 illustrates a plan view of a signal processing system of the invention.

Figure 4 illustrates a plan view of the XCDR of Figure 3.

Figure 5 illustrates a plan view of an XCDR for the exemplary implementation of the invention.

Figure 6 illustrates a plan view of the DSPC of Figure 5.

Figure 7 illustrates a plan view of the PKTE of Figure 5.

Figure 8 illustrates a plan view of the PCME of Figure 5

### DESCRIPTION OF THE INVENTION

Figure 3 illustrates a plan view of a signal processing system of the invention. The signal processing system 3 comprises input/output (I/O) channel cards 4, a hybrid switch 5, and transcoders (XCDRs) 6.

The system depicted in Figure 3 is used to connect a telephony network to a packet network for the purpose of transporting telephony data, which is typically transported over a TDM network, over the packet network. Examples of such telephony data include, but are not limited to, voice telephone calls, facsimile (fax) transmission sessions, and data (modem) transmission sessions. Here, the "forward" direction of data transmission shall be considered to be from the TDM network to the packet network, and the "reverse" direction of data transmission shall be considered to be from the packet network to the TDM network.

In the forward direction, a TDM network 7 is terminated at an I/O channel card 4. PCM data from the TDM network is extracted by the I/O channel card 4 and sent to the hybrid switch 5. The hybrid switch 5 uses its TDM switching functionality to transfer the PCM data to one or more transcoder (XCDR) cards 6. On the XCDR card 6, the PCM data is converted to packet data using one or more conventional conversion algorithms, depending on the type of information (voice, fax, or data) represented by the PCM data. This packet data is then sent back from the XCDR card 6 to the hybrid switch 5. The hybrid switch 5 uses its packet switching functionality to transfer the packet data to one or more I/O channel cards 4. The I/O channel cards 4, which receive the packet data from the hybrid switch 5, transmit the packet data on a packet network 7.

In the reverse direction, packets from a packet network 7 are terminated by an I/O channel card 4 and sent to the hybrid switch 5. The hybrid switch 5 uses its packet switching functionality to transfer the packet to one or more XCDR cards 6. On the XCDR card 6, the packet data is converted back to PCM data using one or more conventional conversion algorithms, depending on the type of information (voice, fax, or data) represented by the packet data. The PCM data is then sent back from the XCDR card 6 to the hybrid switch 5. The hybrid switch 5 uses its TDM switching functionality to transfer the PCM data to one or more I/O channel cards 4. The I/O channel cards 4, which receive the PCM data from the hybrid switch 5, transmit the PCM data on a TDM network 7.

A single I/O channel card 4 can be constructed to connect to a TDM network 7, a packet network 7, or a TDM network 7 and a packet network 7.

The I/O channel cards 4 connect the system 3 to various networks 7. The networks 7 can include both telephone networks, such as the public switch telephone network (PSTN), and packet networks, such as the Internet. Depending on the number of channels desired and on the channel density of input/output I/O channel cards available, one or more I/O channel cards 4 physically connect the system 3 to the networks 7. Each I/O channel card 4 performs pre-processing on incoming data from the corresponding network 7 and prepares data for input to the hybrid switch 5. Each I/O channel card 4 also performs post-processing on data arriving from the hybrid switch 5 before passing the data to the outbound transmission facility on the corresponding network 7.

The hybrid switch 5 is coupled to each of the I/O channel cards 4, and switches both telephony data and packet data. The hybrid switch 5 can be implemented with a conventional hybrid switch such as discussed in: Myron J. Ross, "Circuit versus Packet Switching," chapter in "Fundamentals of Digital Switching" (John C. McDonald, ed.), Plenum Press, 1983.

The hybrid switch 5 can also be implemented using the hybrid switching technique described below.

The XCDRs 6 are each coupled to the hybrid switch 5 and each converts data between a telephony data format and a packet data format.

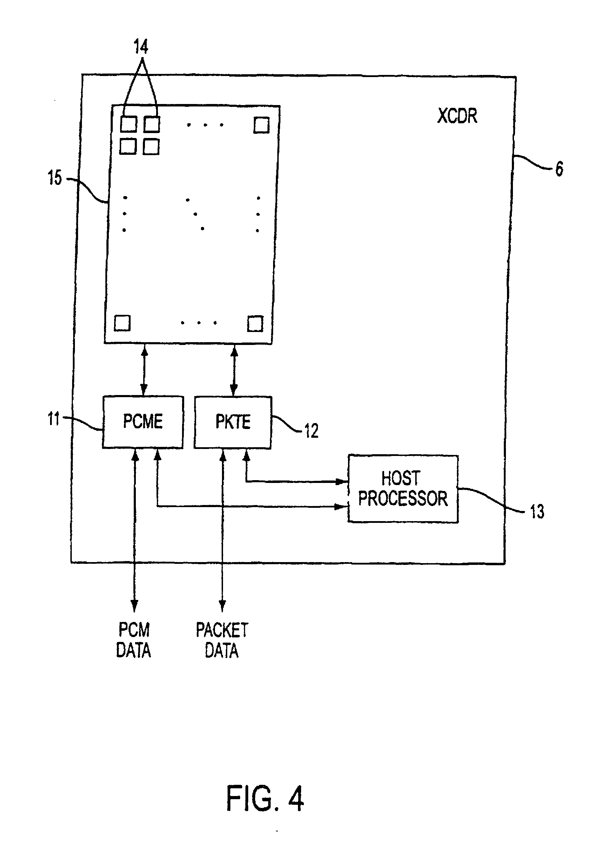

Figure 4 illustrates a plan view of the XCDR 6 of Figure 3. The XCDR 6 includes a two-dimensional array of DSPs 14, called the DSP complex (DSPC) 15, a PCM data engine (PCME) 11, a packet data engine (PKTE) 12, and a host processor 13. Although Figure 4 describes the XDCR 6 using the PCM data format, the invention can be practiced using any telephony data format.

To convert the PCM data to packet data, the XCDR 6 receives PCM data from the hybrid switch 5 into the PCME 11. The PCME 11 routes the PCM data to the appropriate DSP 14 within the DSPC 15. The DSP 14 performs the conversion, and sends the newly created packet to the PKTE 12. The PKTE 12 then completes assembly of the data packets according to the specific packet protocols being implemented and transmits the data back to the hybrid switch 5 for packet switching to one or more I/O channel cards 4 and eventual transmission on the packet network. The PKTE 12 can also accept control channel information from the host processor 13 and insert these into the outbound packet flow.

To convert packet data to PCM data, the XCDR 6 receives the packet data from the hybrid switch 5 into the PKTE 12. The PKTE 12 separates media channel (i.e., telephony) packets from control channel packets and sends the control channel packets to the host processor 13 for processing by the software running on the host processor 13. The media channel packets are sent to the appropriate DSP 14 within the DSPC 5, where they are converted back to PCM data and sent to the PCME 11. The PCME 11 then transmits the PCM data back to the hybrid switch 5 for TDM switching to one or more I/O channel cards 4 and eventual transmission on the telephone network.

The invention is able to achieve signal processing on a large number of channels, on the order of more than a thousand, by separating the media and control channel paths and accelerating the media channel processing with the PCME 11 and PKTE 12 digital logic hardware, and by supporting a large number of DSPs 14 in a two-dimensional array within the DSPC 15.

The DSPC 15 includes a two-dimensional array of DSPs 14. The DSPs 14 are connected together by rows and columns, and each DSP 14 can be addressed by its row and column address.

The PCME 11 and the PKTE 12 are implemented using digital logic hardware. The host processor is implemented using at least one microprocessor or microcontroller running appropriate software.

Each of the components of the XCDR 6 of Figure 4 is further discussed in relation to an exemplary implementation. In the exemplary implementation, the telephony data is in the PCM data format, and the packet data is in the Internet Protocol data format. The exemplary implementation is able to convert 1024 channels of data between the PCM data format and the IP data format. This exemplary implementation, as well as the other examples discussed herein, are non-limiting examples.

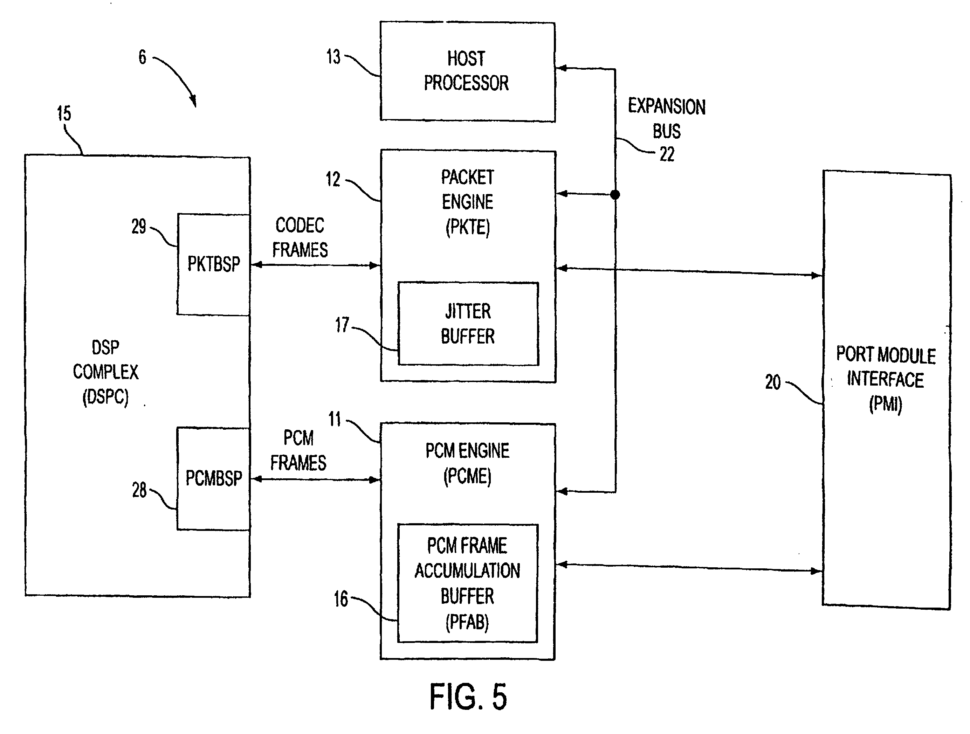

Figure 5 illustrates a plan view of a transcoder for the exemplary implementation of the invention. The XCDR 6 includes: the DSPC 15, which includes the array of DSPs 14 (not shown); the PCME 11, which includes a PCM frame accumulation buffer (PFAB) 16; the PKTE 12, which includes a jitter buffer 17; and the host processor 13. The XCDR 6 interfaces with the hybrid switch 5 via the port module interface (PMI) 20. The XCDR 6 is implemented on a single integrated circuit board.

The XCDR 6 provides two flow paths: a media channel processing path and a control channel processing path. The media channel processing path is faster than the control channel processing path. The media channel processing path is handled primarily by hardware, and the host processor 13 handles the processing for the control channel processing path.

The host processor 13 performs the majority of the control and status functions as well as some of the packet encapsulation/de-encapsulation and packet interface functions for the control channel processing path. The host processor 13 coordinates the overall operation of the XCDR 6 and monitors and maintains packet protocol session on the XCDR 6. Examples of packet protocols include, but are not limited to, the real-time transport protocol (RTP) and the real-time transport control protocol (RTCP). The host processor 13 exchanges control and status information with the PKTE 12 and PCME 11 via an on-board expansion bus 22. The host processor 13 exchanges control and status information with the DSPC 15 via the PKTE 12.

The PKTE 12 performs a portion of the packet interface functions and the packet encapsulation/de-encapsulation functions. The PKTE 12 is the conduit for which the host processor 13 and the DSPC 15 can exchange CODEC frames and control and status information. More specifically, the PKTE 12 receives input packet data units from the hybrid switch 5 and either sends the input data units to the host processor 13 or processes the input data units itself. All non-media channel traffic is sent to the host processor 13, and all media channel traffic is processed by the PKTE 12. The media channel traffic processing consists of validating the packet and placing its payload in the jitter buffer 17. The PKTE 12 maintains a jitter buffer for each channel. The PKTE 12 transfers CODEC frames from the jitter buffer 17 to the DSPC 15. The PKTE 12 receives media channel packets from the DSPC 15 and transmits them over the PMI 20 to the hybrid switch 5. Finally, the PKTE 12 transfers software code and control and status information between the host processor 13 and the DSPC 15.

The jitter buffer 17 stores received media channel payloads (e.g., CODEC frames) until they are needed by the DSPC 15. The jitter buffer 17 consists of many individual jitter buffers. There is one individual jitter buffer for each channel. Each individual jitter buffer is configurable on a per channel basis. The jitter buffer 17 absorbs and smooths the variations in inter-arrival time of packets received from the packet network 7.

Alternatively, the jitter buffer 17 can be implemented in the DSPC 15.

The DSPC 15 performs all of the transcoding functions as well as some of the encapsulation functions and packet interface functions. In one direction to convert data from the PCM data to the packet data format, the DSPC 15 receives PCM frames from the PCME 11, encodes them, encapsulates them into media channel packets and sends them to the PKTE 12. In the reverse direction to convert data from the packet data format to the PCM data format, the DSPC 15 receives CODEC frames from the PKTE 12, decodes them, and sends them to the PCME 11.

The PCME 11 performs all of the PCM interface functions. The PCME 11 receives PCM samples from the PMI and accumulates the samples into PCM frames in the PFAB 16. The PCME 11 transfers PCM frames between the PFAB 16 and the DSPC 15. The PCME 11 segments PCM frames and transmits them over the PMI 20.

The PFAB 16 is a memory buffer and provides storage for PCM frames.

The functions and inter-operation of the components of the XCDR 6 in Figure 5 are next described by following the flow path of a telephone channel through the XCDR 6.

To convert data from the PCM data to the packet data format, PCM samples are received by the PCME 11 from the PMI 20, and the PCME 11 stores the PCM samples in the PFAB 16. When an entire PCM frame has been accumulated, the PCME 11 transfers the frame to the DSPC 15. The DSPC 15 then performs and encodes the frame using appropriate CODEC algorithms. Completed frames are then encapsulated into media channel packets and sent to the PKTE 12. The PKTE 12 transmits the media packets over the PMI 20.

To convert data from the packet data format to the PCM data format, the PKTE 12 receives packets over the PMI 20 and reassembles them into media channel packets. The PKTE 12 then validates the packet header information and sends it to the host processor 13 for use in statistics calculations. Next, the PKTE 12 resequences the media channel payload and places it in the individual jitter buffer of the jitter buffer 17 appropriate to the channel. At a periodic interval, the PKTE 12 removes a CODEC frame from the individual jitter buffer and sends it to the DSPC 15. Next, the DSPC 15 decodes the CODEC frame and produces a PCM frame. The DSPC 15 then sends the frame to the PCME 11. Finally, the PCME 11 transmits the PCM frame over the PMI 20.

The DSPC 15, the PATE 12, the PCME 11, and the host processor 13 are next discussed further in depth.

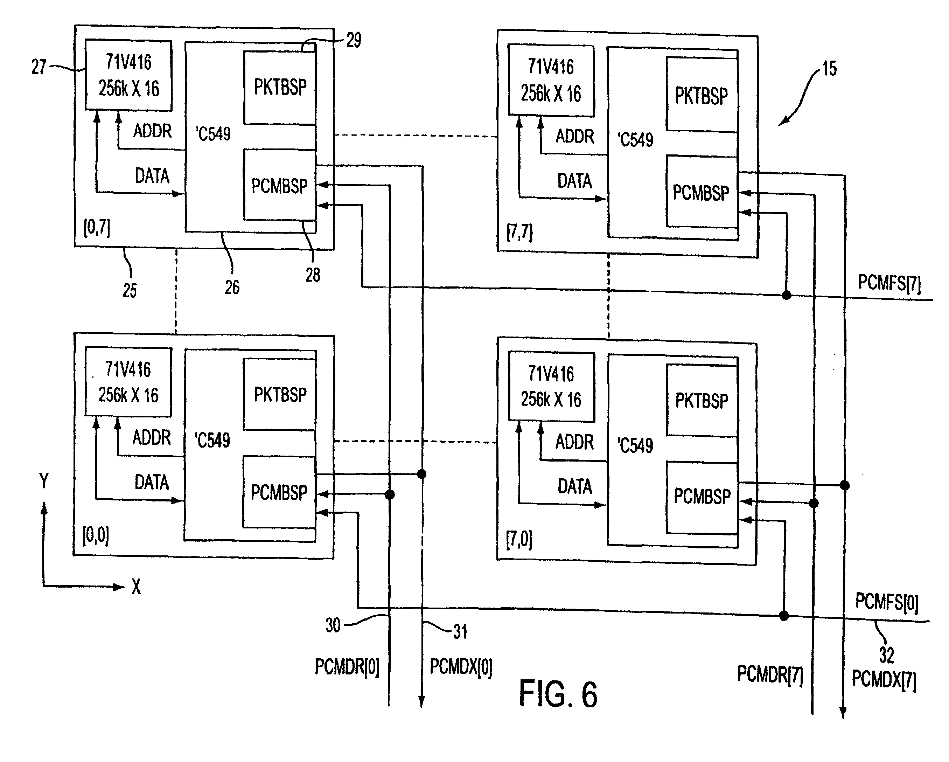

Figure 6 illustrates a plan view of the DSPC 15 of Figure 5 using an 8 x 8 DSP array of 64 DSP sub-complexes 25. Each of the 64 sub-complexes 25 contains a DSP 26 and a memory 27. For the example, the DSP 26 is a TMS320VC549 DSP manufactured by Texas Instruments Inc. of Dallas, Texas, and the memory 27 is an IDT71V416 256k x 16 asynchronous SRAM manufactured by Integrated Device Technology of Santa Clara, California.

The individual DSP 26 is identified by its coordinates on the x-y grid. For example, the DSP 26 in the lower left corner is DSP(0,0), and the DSP 26 in the upper right corner is DSP(7,7).

All communications with the DSPC 15 are handled via the two buffered serial ports (BSP's) on each of the DSP 26. BSPO is designated as the PCMBSP interface 28 and is connected to the PCME 11, and BSPI is designated as the PKTBSP interface 29 and is connected to the PKTE 12. The BSP's are connected to the PCME 11 and the PKTE 12 such that the number of inputs and outputs to the PCME 11 and the PKTE 12 is as small as possible without overloading any one signal.

The interconnect scheme for the PCMBSP interfaces 28 is illustrated in Figure 6. The interconnect scheme for the PKTBSP interfaces 29 is identical to the interconnect scheme for the PCMBSP interfaces 28 and is omitted for clarity. Each column of DSP 26 shares a common receive data line PCMDR 30 and a common transmit data line PCMDX 31. Each row of the DSP 26 shares a common frame sync line PCMFS 32. All the BSP's in a single row are operated concurrently based on the same frame sync signal, and all 64 DSP 26 can be accessed by accessing each row in turn. For this example of 64 DSP chips 26, this interconnect scheme requires only 24 I/O's to the PCME 11.

In order for all the BSP's in a given row to operate from a common frame sync pulse on PCMFS 32, the BSP's all use a common buffer size and a common data transfer format. The format used to transfer data is a DSPC frame. There are two types of DSPC frames: PCM frames and PKTBSP frames. PCM frames are used over the PCMBSP interface 28, and PKTBSP frames are used over the PKTBSP interface 29.

The PKTE 12 performs the following functions: receives packet traffic from the hybrid switch 5; separates input media channel traffic from control channel processing path traffic, where the PKTE 12 processes the media channel traffic, and the control channel traffic is sent to the host processor 13 for processing; for received media channel traffic, performs header validation checks, and buffers and time stamps packet headers for eventual transfer to the host processor 13; drops packets not meeting acceptance criteria; resequences and queues media channel packet payloads into individual jitters buffers; dequeues CODEC frames from individual jitter buffers and transfers the CODEC frames to the DSPC 15 on a periodic basis; maintains an individual jitter buffer for each channel; reports individual jitter buffer underflows and overflows to the host processor 13; receives packets from the DSPC 15 and transmits them over the PMI 20; transfers control and status information between the host processor 13 and the DSPC 15; and receives packets from the host processor 13 and transmits them over the PMI 20.

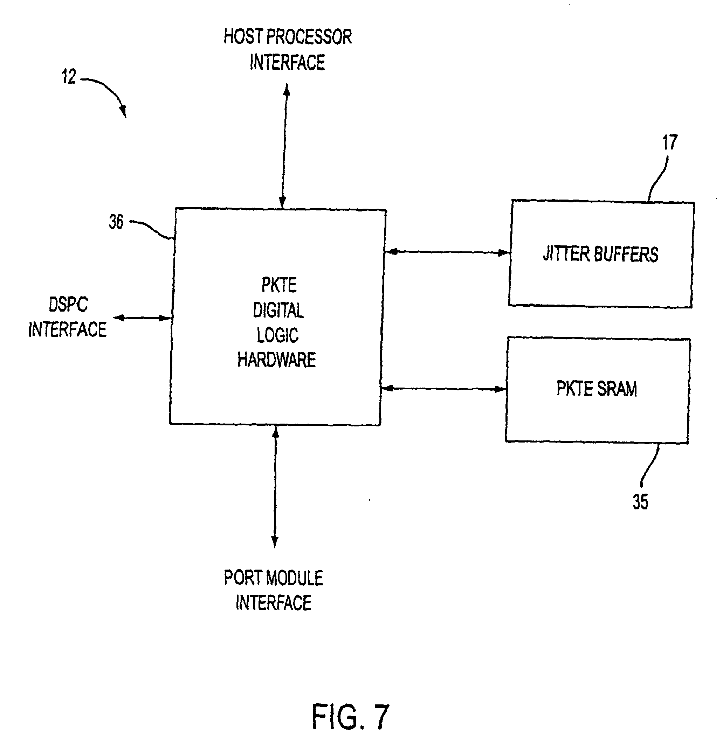

Figure 7 illustrates a plan view of the PKTE 12 for the exemplary implementation of Figure 5. The PKTE 12 includes three components; the jitter buffer 17; a PKTE SPAM 35; and the PKTE digital logic hardware 36. The jitter buffer 17 provides temporary storage of received packet payloads (i.e., CODEC frames). The PKTE SRAM 35 stores the per channel information needed to perform packet processing and maintains the jitter buffers. The PKTE SRAM 35 also provides temporary storage for packet headers and other information that is passed to the host processor 13. The PKTE digital logic hardware 36 controls, coordinates, and implements the operation of the PKTE. The PKTE digital logic hardware 36 communicates with the host processor 13 and with the DSPC 15.

The memory device used to implement the jitter buffer 17 is the IDT71V547S100PF 128k x 36 synchronous SRAM, made by Integrated Device Technology (IDT) of Santa Clara, California. The same device is used to implement the PKTE SRAM 35. The PKTE digital logic hardware 36 is implemented in an XC4044XL field programmable gate array (FPGA) made by Xilinx, Inc. of San Jose, California.

The implementation of the PKTE 12 is not limited to the devices used in the exemplary system. Any memory devices can be used in place of the IDT SRAMs, and any digital logic technology can be used in place of the Xilinx FPGA. Examples of the latter include, but are not limited to, application specific integrated circuits (ASICs), competitive FPGAs including, but not limited to, devices from Altera Corporation of San Jose, California, Lattice Semiconductor Corporation of Hillsboro, Oregon, and Vantis Corporation of Sunnyvale, California, and discrete logic implementations.

The PCME 11 performs PCM interface functions and a variety of other tasks necessary to support these main functions as well as inter-operate with other parts of the XCDR 6. With reference the exemplary embodiment, the PCME 11 performs the following functions: receives PCM samples from the hybrid switch 5; selects up to 1024 telephony channels for transcoding; accumulates PCM frame payloads in the PFAB; transmits PCM frames to the DSPC 15; receives PCM frames from the DSPC 15; generates time stamps; and transmits the PCM frames to the hybrid switch 5.

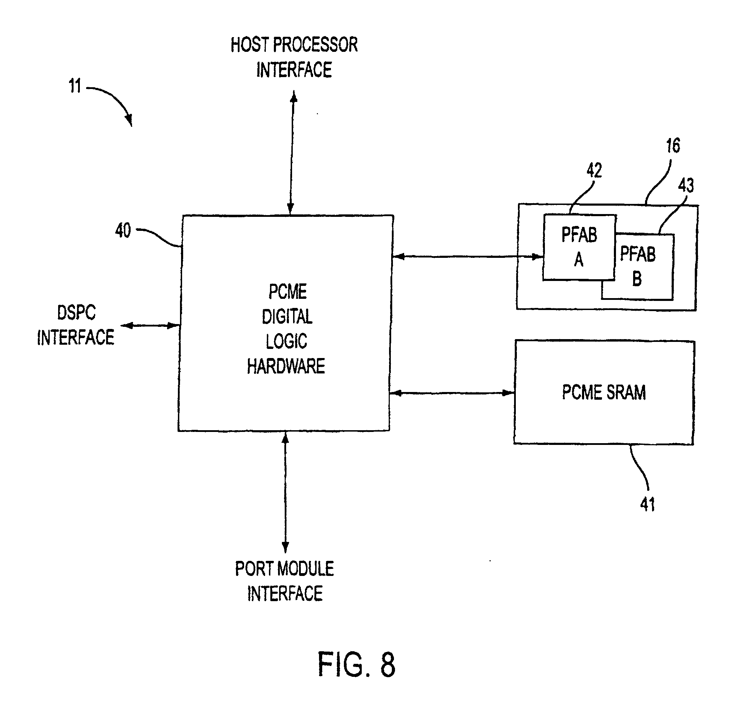

Figure 8 illustrates a plan view of the PCME 11 for the exemplary implementation of Figure 5. The PCME 11 includes three components: the PCME digital logic hardware 40, a PCME SRAM 41, and the PFAB memory 16, which includes a first PFAB memory (PFABA) 42 and a second PFAB memory (PFABB) 43.

The PCME 40 performs the control, synchronization, and interfacing functions of the PCME 11. The memory 41 stores a lookup table that identifies which telephony channels are being processed by the XCDR 6. The PFABA 42 and PFABB 43 are dual-port memories used to accumulated individual PCM samples into PCM frames.

The memory devices used to implement the PFABA 42 and PFABB 43 are the IDT70V9089 64k x 8 synchronous dual-port SRAM, made by Integrated Device Technology of Santa Clara, California. The memory device used to implement the PCME SRAM 41 is the IDT71V433 32k x 32 synchronous SRAM made by Integrated Device Technology of Santa Clara, California. The PCME digital logic hardware 40 is implemented in an XC4028XL field programmable gate array (FPGA) made by Xilinx, Inc. of San Jose, California.

The implementation of the PCME 11 is not limited to the devices used in the exemplary system. Any memory devices can be used in place of the IDT SRAM devices, and any digital logic technology can be used in place of the Xilinx FPGA. Examples of the latter include, but are not limited to, application specific integrated circuits (ASICs), competitive FPGAs including, but not limited to, devices form Altera Corporation of San Jose, California, Lattice Semiconductor Corporation of Hillsboro, Oregon, and Vantis Corporation of Sunnyvale, California, and discrete logic implementations.

The host processor 13 performs the functions in the control channel processing path. Specifically, the host processor 13 performs the following functions: collecting media statistics; generating control packets; receiving control packets; configuring the DSPC 15; performing status maintenance for the DSPC 15; and configuring the PCME 11 and the PKTE 12.

For the exemplary embodiment, the host processor 13 is implemented with the IDT79RV4700 microprocessor manufactured by Integrated Device Technology of Santa Clara, California. The host processor 13 can also be implemented with one or more microprocessors or microcontrollers, such as the Pentium II microprocessor manufactured by Intel of Santa Clara, California, the 68360 microprocessor manufactured by Motorola of Schaumburg, Illinois, and the i960 microcontroller manufactured by Intel of Santa Clara, California.

The invention can be used with various types of telephony data, TDM data, and packet data. The telephony data, for example, can be PCM data. The TDM data, for example, can be any of the following TDM data types: synchronous optical network (SONET), synchronous digital hierarchy (SDH), T3, T1, E3, and E 1. The packet data, for example, can be any of the following packet data types: asynchronous transfer mode (ATM), Internet protocol (IP), frame relay, and X25. These examples, as well as the other examples discussed herein, are non-limiting examples. For instance, there are currently other TDM data types available, and numerous other packet data types available. These other current TDM and packet data types can be used with the invention, and other telephony, TDM, and packet data types to be developed to accommodate communication needs can likewise be used with the invention.

### EMBODIMENT OF HYBRID SWITCHING:

### BACKGROUND OF THE INVENTION

### Field of the Invention

The invention relates to switching of both telephony data and packet data within a telecommunication switching system.

### Discussion of the Prior Art

Time division multiplexed (TDM) switching and packet switching are altemative techniques for multiplexing many low-speed data channels into a single high-speed data channel for transport through a network. TDM data is passed to a telephone network, such as the public switch telephone network (PSTN), and packet data is passed to a packet network, such as the Internet. By multiplexing multiple low-speed data channels into a single high-speed data channel, benefits such as economic advantage and ease of management are realized. Traditionally, TDM networks and switching systems are segregated from packet networks and switching systems because each technique has different data types.

In TDM switching, a fixed partition of the available transport bandwidth is reserved when a connection to the switch is established. The partition takes the form of a "time slot," which is a segment of the data stream that occurs at regular intervals. During its assigned time slot, a data source may insert TDM data towards the remote end. If the source has no TDM data to send, the time slot is unused. Similarly, there is no mechanism for the data source to temporarily exceed the capacity provided by its assigned time slot. For TDM switching, data transfer characteristics for a given data channel, such as end-to-end delay and delay variation, are bounded and are independent of other channels carried over the same transport facility. Since the available data rate is constant, TDM is well-suited to data types such as uncompressed voice and video that present a constant bit stream to the network and require low, predictable transmission delays.

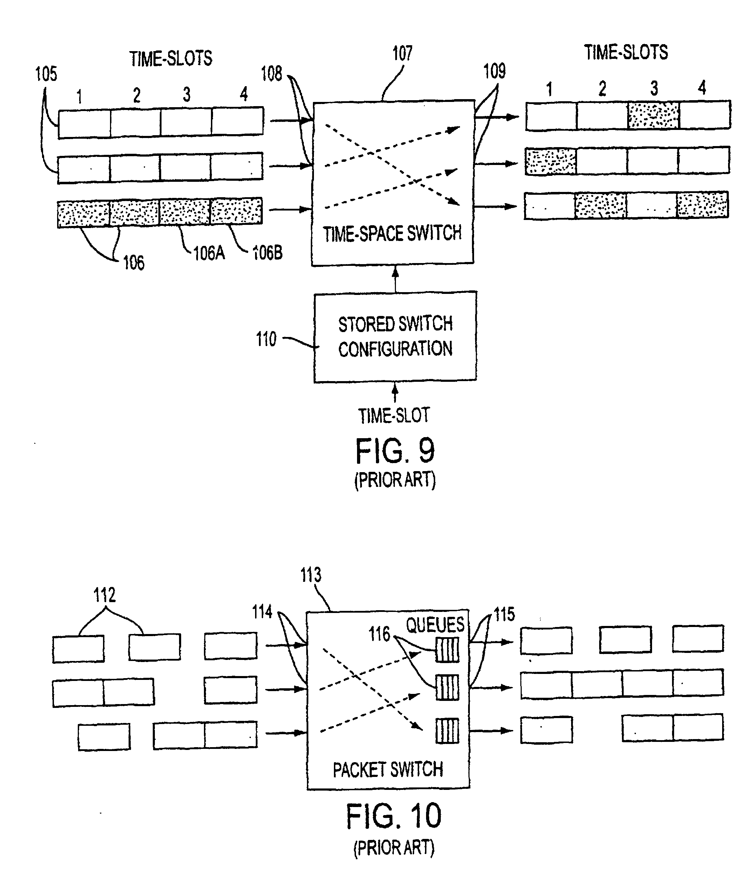

Figure 9 illustrates a plan view of a traditional time-space architecture for switching TDM traffic. The terms "time" and "space" refer to the dimensions which are manipulated in order to route each segment of TDM data to its desired destination. The "time" dimension corresponds to the time slots defined for each incoming and outgoing port. The "space" dimension corresponds to the incoming and outgoing physical ports of the switch. Traditional time-space architectures for switching TDM traffic are discussed in: Tarek N. Saadawi, Mostafa H. Ammar, and Ahmed El Hakeem, "Fundamentals of Telecommunication Networks," John Wiley & Sons, 1994; and Matthew F. Slana, "Time-Division Networks," chapter in "Fundamentals of Digital Switching" (John C. McDonald, ed.), Plenum Press, 1983.

In Figure 9, incoming data at each input port is organized into frames 105, which are repetitive, fixed length sequences of time slots 106. During each frame, the time-space switch 107 passes data corresponding to each time slot 106 at an input port 108 to a specific time slot of an output port 109. The correspondence of input port 108 to output port 109 is specified by a stored switch configuration 110, which is generated at the time a connection (e.g., telephone call) is established and is static for the duration of the connection. Each TDM data unit arriving at the input of the switch 107 may have to be stored for a short time period while awaiting output from the switch at the proper time slot. The time period corresponds to the difference in time between the input time slot and the output time slot. The storage interval is constant and is less than one frame in duration.

In contrast to TDM switching, packet switching uses burst-type data, such as those associated with e-mail and file transfer applications. In a packet network, packet data sources compose data into units called packets for passage through the network. When a packet data source has a packet for transmission, it competes with other packet data sources for access to the transport facility. Since a packet data source without data to send consumes no network resources, packet switching is ultimately more efficient in terms of total data throughput. However, packet data sources requiring service (i.e., transmission of data) may be momentarily "blocked" by other packet data sources simultaneously requesting service. Therefore, the time required for a packet to traverse the network is not "deterministic" from the point of view of each packet data source. Furthermore, during periods of overuse, the network may "drop" data packets, and these data packets never reach their destination.

Figure 10 illustrates a plan view of a traditional architecture for switching packet traffic. In contrast to the architecture shown in Figure 9, packets 112 are not organized into frames, and the temporal position of each packet 112 with respect to other packets 112 is unimportant. The destination information for each packet is carried, either explicitly or implicitly, within the packet. Based on this information, the switch 113 routes the packet 112 from the input port 114 to one the output ports 115 of the switch 113, The information for routing the packets 112 is represented by the dashed lines in the switch 113. Unlike the switch 107, there is no guarantee that a collision will not occur at a given output 115 of the switch 113. Therefore, queues 116 are implemented at each output that can temporarily store traffic until the output becomes available. The queues 116 compensate for the variation in instantaneous demand for access to each output port 115. Traditional architectures for switching packet traffic is discussed in: Tarek N. Saadawi, Mostafa H. Ammar, and Ahmed El Hakeem, "Fundamentals of Telecommunication Networks," John Wiley & Sons, 1994; and Myron J. Ross, "Circuit versus Packet Switching," chapter in "Fundamentals of Digital Switching" (John C. McDonald, ed.), Plenum Press, 1983.

For a TDM switch, data corresponding to each incoming channel arrives at fixed, predictable intervals, and the input data rate always exactly matches the output data rate. For a packet switch, no specific time intervals are defined, so packets associated with each channel may arrive at any given interface at any time, and the input data rate in a packet switch may exceed the output data rate. These differing characteristics of TDM data and packet data imply the use of disparate architectures for switching, as has been done traditionally. However, it is possible to design a switching platform that is capable of handling a mix of TDM and packet-switched data. Such a platform is termed a "hybrid switch."

Hybrid switching techniques have been proposed and implemented in which TDM data is encapsulated into packets at the input of a hybrid switch. The TDM encapsulated packet is then routed to its destination output port using traditional packet-switching techniques. At the destination, the TDM data is extracted from the packet and is returned to TDM format. Traditional architectures for hybrid switching are discussed in: Myron J. Ross, "Circuit versus Packet Switching," chapter in "Fundamentals of Digital Switching" (John C. McDonald, ed.), Plenum Press, 1983.

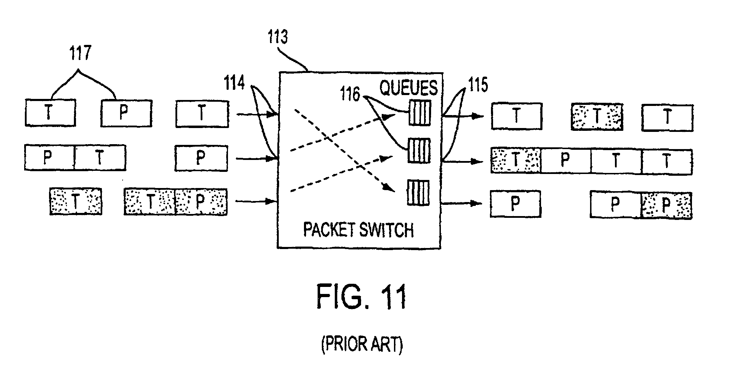

Figure 11 illustrates a plan view of an architecture for a prior art hybrid switch. The switch 113 of Figure 11 operates in the same manner as the switch 113 in Figure 10. The difference between Figures 2 and 3 is the type of packets that are sent to the switch 113. In Figure 10, the packets 112 only contained packet data, and in Figure 11, the packets 117 can contain either packet data, designated as "P", or TDM data, designated as "T". Prior to being sent to the switch 113, the TDM data is encapsulated as a packet, and after exiting the switch 113, the TDM data is de-encapsulated from the packet.

Prior art hybrid switches are advantageous in that a common packet switch core can be used to route both TDM data and packet data. However, the advantages of low, predictable delays offered by TDM switching may be lost because packets containing TDM data must compete with other packets in passing through the switch. Furthermore, the difficulty of converting the TDM data to and from packet data typically sacrifices the gains won by utilizing a common switching mechanism.

As another prior art hybrid switch, European Patent Applicaiton No. 0 345 891 teaches another prior art hybrid switch. Multiple input timer stages are connected to multiple output timer stages via a switching stage to switch circuit orientated data and packet orientated data.

As a further prior art hybrid switch, European Patent Applicaiton No. 0 312 628 teaches a further prior art hybrid switch. A self-routing switch fabric is used to route uniform minipackets. All incoming data, whether circuit data or packet data, is reformatted as a uniform minipacket with a routing addresses designating the required output port.

### SUMMARY OF THE INVENTION

An object of the invention is to provide a hybrid switch for switching both TDM data and packet data, where the switching of packet data has no effect on the latency or jitter of the switching of TDM data.

An object of the invention is to provide a hybrid switch that has isochronous TDM data transfers and no TDM data delays at the output of the switch, even though the hybrid switch is also switching packet data.

An object of the invention is to provide a hybrid switch that has the same performance for switching TDM data as a standard time-space switch for switching TDM data, even though the hybrid switch is also switching packet data.

An object of the invention is to provide a hybrid switch that has no routing overhead for the TDM data, even though the hybrid switch is also switching packet data.

The invention includes a switch for switching TDM data and packet data between input ports and output ports. The switch comprises: a plurality of input ports receiving data, wherein each data comprises either TDM data or packet data; a plurality of output ports transmitting switched data; and a shared memory coupling the input ports to the output ports. The shared memory sequentially receives the data from the input ports, and switches a sequentially received data from a respective input port to a respective output port. Switching of packet data by the shared memory has no latency or jitter effect on switching of TDM data by the shared memory.

The invention includes a method for switching TDM data and packet data from input ports to output ports comprising the steps of: switching a TDM data from an input port to an output port, and switching a packet data from an input port to an output port. Switching a TDM data from an input port to an output port comprises: receiving a TDM data at the input port; determining the output port to route the TDM data; storing the TDM data in a preselected area of a shared memory; reading the TDM data from the preselected area of said shared memory; and transmitting the TDM data from the output port. Switching a packet data from an input port to an output port comprises: receiving a packet data at the input port; determining the output port to route the packet data; storing the packet data in said shared memory; reading the packet data from said shared memory; and transmitting the packet data from the output port. Switching packet data has no latency or jitter effect on switching TDM data.

Moreover, the above objects and advantages of the invention are illustrative, and not exhaustive, of those which can be achieved by the invention. Thus, these and other objects and advantages of the invention will be apparent from the description herein or can be learned from practicing the invention, both as embodied herein and as modified in view of any variations which may be apparent to those skilled in the art.

### BRIEF DESCRIPTION OF THE DRAWINGS

Embodiments of the invention are explained in greater detail by way of the drawings, where the same reference numerals refer to the same features.

Figure 9 illustrates a plan view of a traditional time-space architecture for switching TDM traffic.

Figure 10 illustrates a plan view of a traditional architecture for switching packet traffic.

Figure 11 illustrates a plan view of an architecture for a prior art hybrid switch.

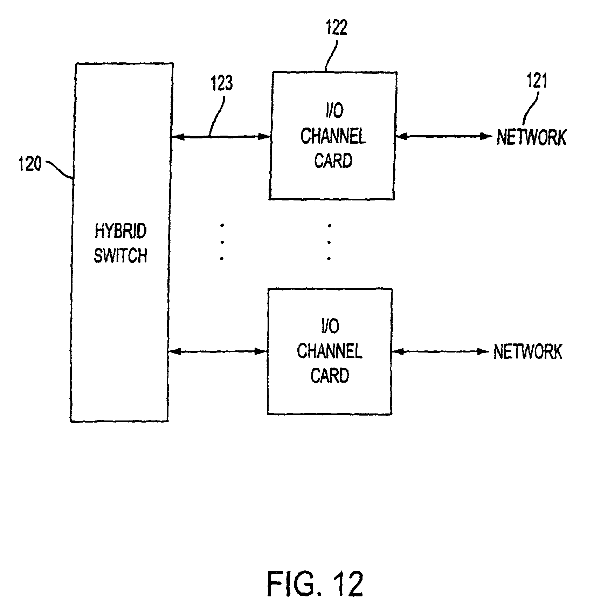

Figure 12 illustrates a plan view of the hybrid switch of the invention.

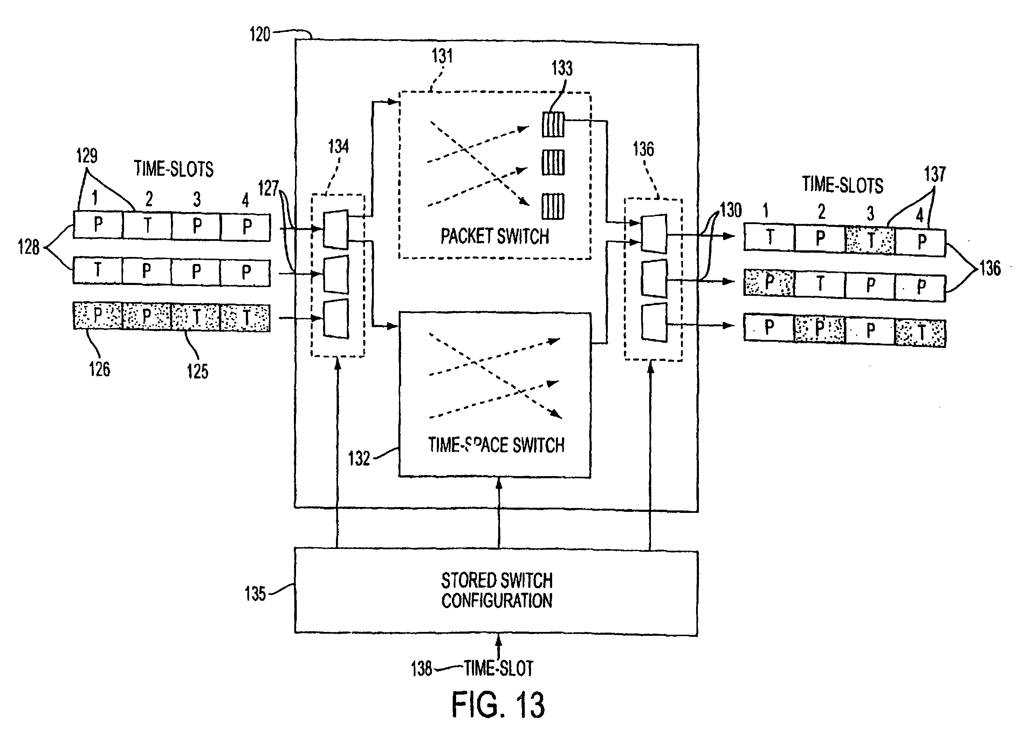

Figure 13 illustrates a conceptual plan view of a hybrid switch of the invention.

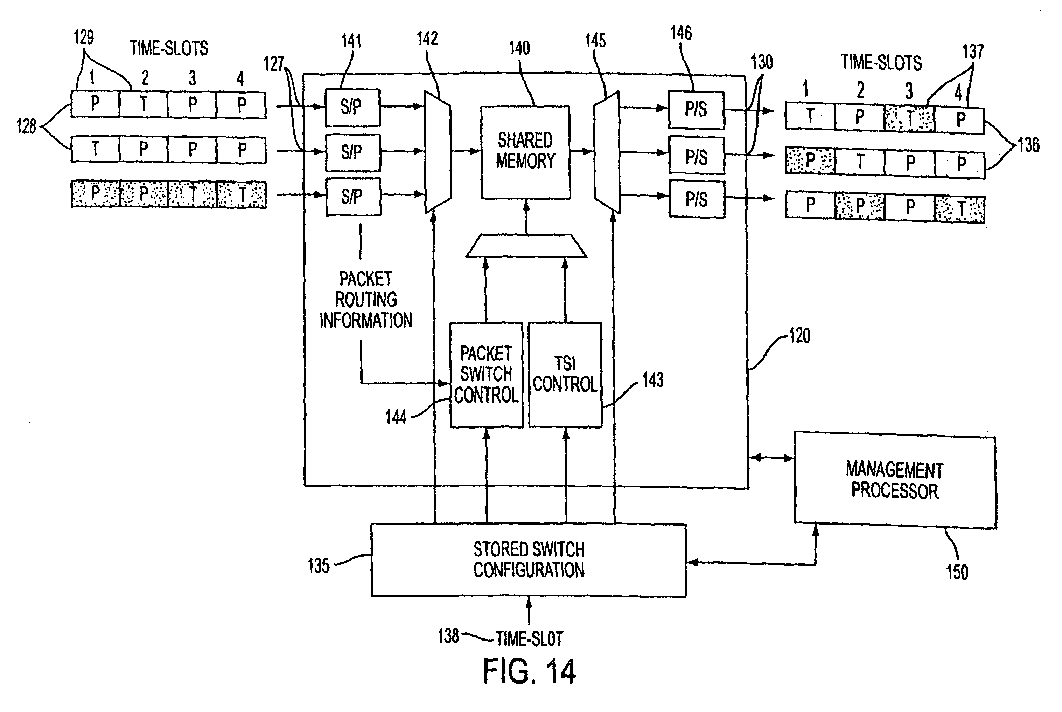

Figure 14 illustrates a plan view of a hybrid switch using shared memory.

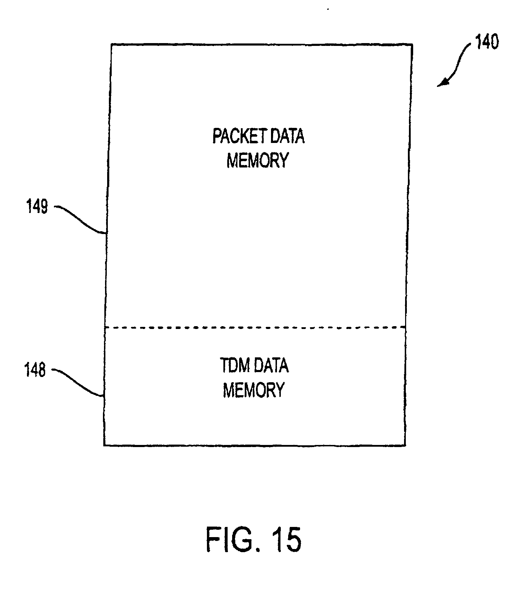

Figure 15 illustrates a plan view of the shared memory of the hybrid switch of Figure 14.

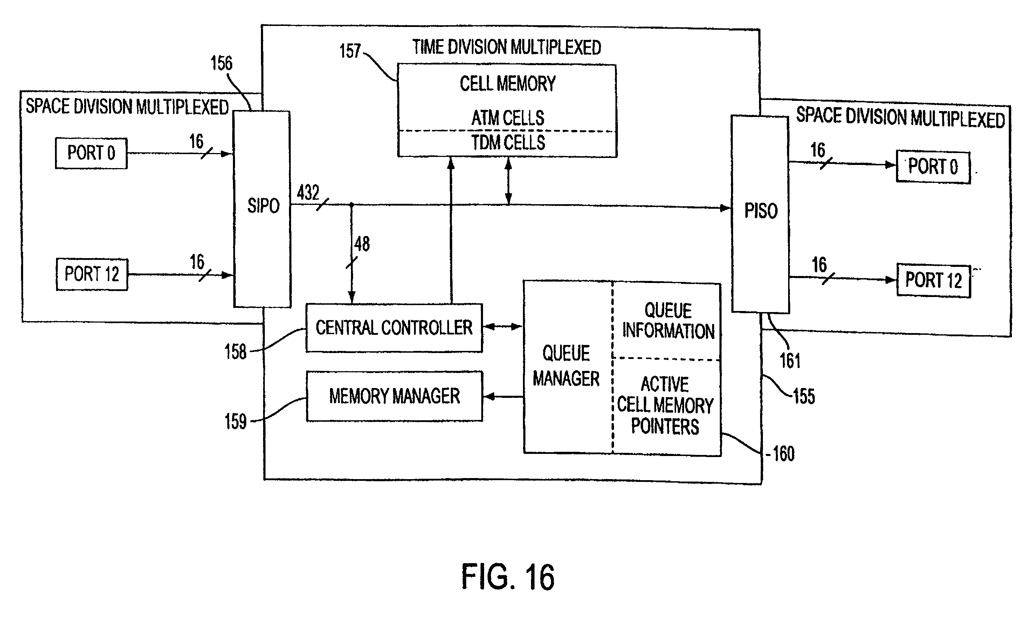

Figure 16 illustrates a plan view of the exemplary implementation.

### DESCRIPTION OF THE INVENTION

In the hybrid switch of the invention, TDM data and packet data are switched in a common switch. TDM data is passed through the switch in a deterministic manner as in a conventional TDM switch architecture. The passage of each TDM channel through the switch is unaffected by the bandwidth needs of other packet and TDM channels.

Figure 12 illustrates a plan view of the hybrid switch of the invention. A hybrid switch 120 is coupled to networks 121. The networks 121 can include both telephone networks, such as the PSTN, and packet networks, such as the Internet. Depending on the number of channels desired and on the channel density of input/output (I/O) channel cards available, one or more I/O channel cards 122 physically connect the hybrid switch 120 to networks 121. Each I/O channel card 122 performs pre-processing on incoming data from the corresponding network 121 and prepares data for input to the hybrid switch 120. Each I/O channel card 122 also performs post-processing on data arriving from the hybrid switch 120 before passing the data to the outbound transmission facility on the corresponding network 121.

In the hybrid switch of the invention, the framed time slot approach of Figure 9 is used. The time slots within the input or output frames may be logically grouped in order to form a channel capacity greater than that provided by a single time slot. Since this channel is indivisible with respect to the switch, it is termed a "logical port." A channel carried by a single time slot is also considered to be a logical port. A single physical port can encapsulate many logical ports.

In contrast to the prior art switches, each logical port of the hybrid switch may be defined to carry either TDM data or packet data. The destination for TDM logical ports is determined by a stored switch configuration as described for the switch of Figure 9. For logical ports carrying packets, the data may be independently routed, on a packet-by-packet basis, to any output logical port. The hybrid switch determines the destination logical port for each packet by examining both the input logical port, the routing information carried in the packet, and the stored switch configuration.

Figure 13 illustrates a conceptual plan view of a hybrid switch of the invention. The hybrid switch 120 receives both TDM data 125, indicated by "T," and packet data 126, indicated by "P". Incoming data at each input port 127 of the switch 120 is organized into frames 128, which are repetitive, fixed length sequences of time slots 129. For each frame, the switch 120 passes data from input ports 127 to specific output ports 130 as determined by the stored switch configuration 135. Although only one frame of data is shown for each input and for each output of the switch 120, the assignment of time slots 129 to TDM data and packet data is the same for all frames.

The hybrid switch 120 conceptually contains both a packet switch 131 and a time-space switch 132. At the input of the switch 120, a data router 134 routes data from the input ports 127 to either the packet switch 131 or the TDM switch 132 on a logical port basis. The assignment is determined by a stored switch configuration 135 for the switch 120. At the output of the switch 120, a data router 136 routes data from the TDM and packet switches 131, 132 to the appropriate output ports 130. Like data at the input ports 127, data at the output ports 130 is organized into frames 136 and times slots 137. The TDM switching is accomplished by the time-space switch 132, and the packet switching is accomplished by the packet switch 131, which uses internal queues 133. It should be noted that the separation in Figure 13 of the TDM and packet switches 131, 132 are conceptual, and in practicing the invention, the TDM and packet switches 131, 132 are combined.

The relationship between the input ports 127 and the output ports 130 is determined by the stored switch configuration 135. The stored switch configuration 135 is updated each time a TDM or packet connection is established or terminated. For TDM switching, the stored switch configuration 135 determines where to route the data by examining the input time slot 138. For packet switching, the stored switch configuration 135 determines where to route the packet by examining both the input logical port of the packet and the routing information carried in the packet.

The hybrid switch 120 of the invention differs from the prior art hybrid schemes of Figure 11 in which TDM channels are passed through a packet switch by encapsulating blocks of TDM data in packets. The encapsulation and de-encapsulation processes required by these prior art schemes are complex in that routing information must be added to the TDM data before it is passed to the packet switch 113. Then, at the egress of the packet switch, the TDM data must be extracted from the packet. Furthermore, TDM packets must compete with each other and with other packets in traversing the packet switch. Therefore, it is difficult to specify a fixed latency for the transfer of each packet, and an elastic store at the switch egress is required to compensate for the latency variation. With the prior art scheme, for example, undesirable disruptions to TDM switched telephone conversations may be experienced due to nonuniform delays encountered by TDM data passing through such a switch.

In contrast, using the hybrid switch of the invention, routing information does not need to be added to the TDM data before the TDM data is passed to the switch 120. The hybrid switching of the invention is unique in that the TDM data does not need to be encapsulated in packets in order to be passed through the switch 120. This yields several distinct advantages. First, the TDM data transfers are isochronous with the input and output clocks. Therefore, no elastic store is required for the removal of latency variations at the switch egress. Second, the bandwidth required by the switch for the switching of each TDM logical port is automatically reserved, and cannot be pre-empted by other traffic. Therefore, the performance is identical to that of a standard time-space TDM switch. Third, no excess switch bandwidth is consumed by routing overhead for the TDM data. The TDM connection information is maintained by the stored switch configuration 135 and is not combined with the TDM data before it is applied to the input of the switch 120.

The hybrid switch 120 can be implemented using any type of packet switch architecture that is superimposed upon the time-space switch used for TDM data. Preferably, the switch 120 is implemented using a shared memory packet switch that can store both TDM data and packet data. Shared memory packet switching that switches only packet data, and does not switch TDM data, is discussed in Tarek N. Saadawi, Mostafa H. Ammar, and Ahmed El Hakeem, "Fundamentals of Telecommunication Networks," John Wiley & Sons, 1994.

In a shared memory packet switch, a large common block of random access memory (RAM) is used to store all packets awaiting transmission. Individual queues of packets, each associated with a single output logical port, are maintained in the shared memory. The queues are established and maintained by a packet switch control function. For each time slot, each input provides one packet at most to the switch, and each output obtains one packet at most from the switch. From the point of view of the shared memory, the switching of either packets or TDM time slots involves no space dimension, since the shared memory has only one input port and only one output port. The switching process involves the time dimension only, and is termed a time slot interchange (TSI).

Typically, packets are presented to and extracted from the shared memory in parallel. Data from each input port must be accumulated until an amount corresponding to the word width of the memory is available. Similarly, a word width of parallel data must be decomposed and forwarded out each output in sequence.

Figure 14 illustrates a plan view of a hybrid switch using shared memory. When used to implement the hybrid switch 120, the shared memory 140 implements a TSI function and a packet-switch function simultaneously. As in Figure 13, the input and output data is arranged in frames 128, 136 with time slots 129, 137. Each input data stream is applied to a serial-to-parallel (S/P) converter 141. A data router 142 routes the output from the serial-to-parallel converters 141 in a multiplexed manner for input to the shared memory 140. The data router 142 selects one output from the serial-to-parallel converters 141 for each memory write cycle. The write address for the shared memory 140 is produced by either a TSI control function 143 or a packet switch control function 144. The shared memory 140 routes the incoming data from the input ports 127 to the appropriate output ports 130. The output of the shared memory 140 is passed to the data router 145. The data router 145 routes the output from the shared memory 140 to parallel-to-serial (P/S) converters 146 in a demultiplexed manner. The parallel-to-serial converters 146 output the TDM data and packet data as frames 136 with time slots 137.

Figure 15 illustrates a plan view of the shared memory 140 of the hybrid switch 120 of Figure 14. The shared memory 140 is a random access memory (RAM) and is divided into two sections, a TDM data memory 148 and a packet data memory 149. The TDM data memory 148 is reserved solely for TDM data, and the packet data memory 149 is reserved solely for packet data. Enough of the shared memory 140 is set aside as the TDM data memory 148 to accommodate the scenario when each time slot 129 of each input frame 128 of each input port 127 has TDM data. In initially partitioning the shared memory 140, after the portion of shared memory 140 is reserved for the TDM data memory 148, the remaining shared memory 140 is reserved for the packet data memory 149. As an example using Figure 14, if the switch had four input ports 127 and if each frame 128 had four time slots 129, the TDM data memory 148 would be reserved to accommodate sixteen TDM data time slot units.

For each memory input cycle of the shared memory 140, if the input time slot belongs to a TDM logical port, the address of the shared memory 140 is selected from the TSI control function 143. If the input time slot belongs to a packet logical port, the address of the shared memory 140 is selected from the packet switch control function 144. The TSI control function 143 always generates the same memory address during the cycle corresponding to a particular time slot of a frame. Data belonging to a particular TDM logical port is written to a stationary buffer of the TDM data memory 148. The packet switch control function 144 generates the address in the packet data memory 149 based on routing data embedded in the packet and based on the logical input port to which the time slot belongs. The address generated by the packet switch control function 144 represents the "tail" of the queue corresponding to a specific output logical port.

For each memory output cycle of the shared memory 140, the address of shared memory 140 is selected in a similar manner as for the memory input cycle. For TDM time slots, the read address of the TDM data memory 148 is provided by the TSI control function 143, which generates the address using the stored switch configuration 135. The address generated corresponds to one of the stationary buffers in the TDM data memory 148. The buffer selection defines the logical port-to-logical port connectivity for TDM connections. The stationary buffer is a static size, and can be as small as one time slot worth of TDM data. For packet time slots, the address of the packet data memory 149 is selected from the packet switch control function 144. The address in the packet data memory 149 generated by the packet switch control function 144 points to the "head" of the queue for the specific output logical port.

The TSI control function 143, the packet switch control function 144, and the stored switch configuration 135 can be implemented using digital logic hardware, software executing on one or more microprocessors or microcontrollers, or a combination of these approaches.

The hybrid switch 120 connects to each of one or more I/O channel cards 122 using two point-to-point interconnections. These point-to-point interconnections are used to transport TDM data and packet data between the hybrid switch 120 and the I/O channel cards 122. One of these interconnections conveys input TDM data and packet data to the hybrid switch 120 from the I/O channel card 122, and the other conveys output TDM data and packet data from the hybrid switch 120 to the I/O channel card 122. These point-to-point connections are called port module interfaces and are designated in Figure 12 with reference numeral 123.

The port module interfaces convey both TDM data and packet data between the hybrid switch 120 and the I/O channel cards utilizing a synchronous, time-slotted frame format. The port module interface is itself a TDM transport mechanism, but this is not the same as the TDM switched data discussed previously. One time slot within the port module interface frame is called a data exchange unit (DEU). A DEU containing TDM switched data is called a TDM DEU, and a DEU containing packet switched data is called a packet DEU.

TDM and packet DEUs are handled by the hybrid switch 120 in a similar manner. Both are received, buffered in the shared memory 140, and subsequently transmitted when scheduled. There are, however, key differences between the formats of TDM and packet DEUs, due to the way they are treated in the hybrid switch 120. Because TDM switching is defined in the stored switch configuration 135 entirely by the time slot in which the DEU resides on the port module interface, no special headers or routing information is needed in the TDM DEU itself. The entire TDM DEU can therefore be composed of the TDM data being switched.

Packet DEUs can enter the hybrid switch 120 at any time, and can be destined for any output port 130. Therefore, packet DEUs include a header containing routing information. The hybrid switch 120 examines the routing information in the header of a packet DEU and uses it, along with the input logical port and the stored switch configuration 135, to determine the output logical port queue into which to place the packet DEU.

The packet DEU concept is not limited to protocols whose packets fit entirely within a single DEU. When using a packet switched protocol that allows for packet lengths which exceed the capacity of a single packet DEU, the packet DEU header can be expanded with additional information needed to support packet fragmentation and reassembly. Such information includes but is not limited to internal ID numbers, fragment sequence numbers, and fragment size information. The architecture of the hybrid switch 120 allows the format of the packet DEU to be redefined based on the needs of the protocols being served by a particular I/O channel card 122.

Within the port module interface, there is complete flexibility for any of the DEU time slots to be defined as carrying either TDM DEUs or packet DEUs. When a DEU time slot is defined as carrying TDM DEUs, it will always be TDM switched in accordance with the stored switch configuration 135. When a DEU time slot is defined as carrying packet DEUs, it will be examined at the hybrid switch 120 input to determine if it contains a packet DEU or a third type of DEU, called a "null" DEU. A null DEU caries no data, but serves as a placeholder in the port module interface frame. If the time slot is found to contain a packet DEU, the DEU will be enqueued in the manner previously described. If the DEU is found to contain a null DEU, the DEU will be discarded.

Overall, the system of Figure 12 operates in a synchronous, time/space division multiplexed manner. The switch 120 and the I/O channel cards 122 exchange DEUs in a space division multiplexed manner over the point-to-point connections between the switch 120 and the I/O channel cards 122. Internal to the switch 120, DEUs are switched in a time division multiplexed manner.

The hybrid switch of the invention can be used with various types of TDM data and packet data. The TDM data, for example, can be any of the following TDM data types: synchronous optical network (SONET), synchronous digital hierarchy (SDH), T3, T1, E3, and E1. The packet data, for example, can be any of the following packet data types: asynchronous transfer mode (ATM), Internet protocol (IP), frame relay, and X25. These two exemplary lists, as well as the other examples discussed herein, are non-limiting examples. For instance, there are currently other TDM data types available, and numerous other packet data types available. These other current TDM and packet data types can be used with the invention, and other TDM and packet data types to be developed to accommodate communication needs can likewise be used with the invention.

### Example

An exemplary implementation of the hybrid switch of the invention is described using the synchronous optical network (SONET) synchronous payload envelope (SPE) data format for TDM data and the asynchronous transfer mode (ATM) cell format for packet data. In this example, the "packets" are actually ATM cells, and the term "ATM DEU" is used in the place of "packet DEU."

Figure 16 illustrates a plan view of the exemplary implementation. The hybrid switch 155 has six major areas of functionality: the SIPO 156, the cell memory 157, the central controller 158, the memory manager 159, the queue manager 160, and the PISO 161.

The SIPO 156 performs serial-to-parallel conversion of the received DEUs. This allows each DEU to be written into cell memory 157 in a single clock cycle. The SIPO 156 converts the space division multiplexed port input into a time division multiplexed input into the switch 155.

The PISO 161 performs parallel-to-serial conversion of the transmitted DEUs. The PISO 161 converts the time division outputs from the switch 155 into space division multiplexed outputs to the output ports.

The cell memory 157 provides storage for both TDM and ATM data traffic in a fully parallel format. All bytes of a given DEU are stored at the same address in cell memory 157. A portion of the cell memory 157 is partitioned for use by TDM data, and the remainder of the cell memory 157 is partitioned for use by ATM data. The memory manager 159 monitors the usage of the cell memory.

The queue manager 160 places the received ATM DEUs into the appropriate queue(s) and dequeues ATM DEUs for transmission. The queue manager 160 also performs congestion management functions.

The central controller 158 coordinates the operation of all the other blocks. The central controller controls the storage of TDM DEUs in cell memory 157 based on the port module bus time slot in which the TDM DEU was received, and also schedules the transmission of TDM DEUs-based on the port module bus time slot in which a TDM DEU is to be transmitted. In other words, the central controller 158 expects to receive and subsequently transmit TDM DEUs in fixed, predetermined port module bus time slots. The remaining port module bus time slots are used to receive and transmit ATM DEUs. ATM DEUs are sent from the I/O channel cards to the hybrid switch in any port module bus time slot not assigned to TDM traffic, but they are sent from the switch to the I/O channel cards only in the assigned time slot. This ensures that each logical port is serviced at the correct rate and allows the I/O channel card to associate DEUs to be transmitted with the correct logical port, and thus the correct physical port.

Reference signs are included in the claims as aids to an easier understanding of the claimed subject matter and should not be construed as limiting the scope of the claims.

## Claims

1. A transcoder (6) for converting data between a telephony data format and a packet data format **characterised in that** the transcoder, comprises:
a digital logic telephony data engine (11) receiving telephony data for said transcoder and transmitting telephony data for said transcoder, said digital logic telephony data engine comprising a frame accumulation buffer (16);
a digital logic packet engine (12) receiving packet data for said transcoder and transmitting packet data for said transcoder;
a digital signal processing complex (15) coupled to said digital logic telephony data engine and said digital logic packet engine, said digital signal processing complex comprising an array of digital signal processors (14) ; and
a host processor (13) coupled to said digital logic telephony data engine and said digital logic packet engine, wherein said digital logic telephony data engine, said digital logic packet engine, and said digital signal processing complex perform media channel processing, wherein said host processor performs control channel processing.

2. A transcoder as claimed in claim 1, **characterised in that** the digital logic packet engine further comprises a jitter buffer (17).

3. A transcoder as claimed in claim 1, **characterised in that** the digital signal processing complex further comprises a jitter buffer.

4. A transcoder as claimed in claim 1, **characterised in that** the transcoder is coupled to a hybrid switch, the said hybrid switch being coupled to a telephone and packet network and switching data between said telephone and packet networks, the said transcoder converting data between a telephony data format used by said telephone network and a packet data format used by said packet network.

5. A transcoder as claimed in claim 4, **characterised in that** the transcoder further comprises:
at least one input/output channel card coupling said hybrid switch to said telephone and packet networks.

6. A method for converting data between a telephony data format and a packet data format, comprising the steps of:
converting data from the telephony data format to the packet data format, **characterised in that** the method comprises the steps of:
receiving data in the telephony data format;
accumulating in digital logic hardware the data to obtain a telephony data frame;
selecting in digital logic hardware a digital signal processor from an array of digital signal processors;
passing the telephony data frame to the selected digital signal processor;
transcoding in the selected digital signal processor the telephony data frame to obtain a coder-decoder data frame; and
encapsulating in the selected digital signal processor the coder-decoder data frame to obtain data in the packet data format; and
converting data from the packet data format to the telephony data format, comprising the steps of:
receiving data in the packet data format;
accumulating in digital logic hardware the data to obtain a packet data frame;
resequencing in digital logic hardware the packet data frame to obtain a coderdecoder data frame;
selecting in digital logic hardware a digital signal processor from an array of digital signal processors;
passing the coder-decoder data frame to the selected digital signal processor;
decoding in the selected digital signal processor the coder-decoder frame to obtain a telephony data frame;
passing the telephony data frame to digital logic hardware; and
encapsulating in digital logic hardware the telephony data frame to obtain data in the telephony data format;
the method further comprising the step of:
performing control channel processing in a host processor.

7. A method as claimed in claim 6, **characterised in that** converting data from the packet data format to the telephony data format comprises removing in digital logic hardware jitter from the coder-decoder data frame.

8. A method as claimed in claim 6, **characterised in that** converting data from the packet data format to the telephony data format comprises removing in the selected digital signal processor jitter from the coder-decoder data frame.

9. A method as claimed in claim 6, **characterised in that** receiving data in the telephony data format comprises receiving from a hybrid switch data to be converted from the telephony data format to the packet data format, and wherein receiving data in the packet data format comprises receiving from said hybrid switch data to be converted from the packet data format to the telephony data format.

10. A system for connecting a telephone network and a packet network, **characterised in that** the system comprises:
a hybrid switch (5) coupled to said telephone and packet networks switching data between said telephone and packet networks; and
at least one transcoder (6) for converting data between a telephony data format and a packet data format, comprising:
a digital logic telephony data engine (11) receiving telephony data for said transcoder and transmitting telephony data for said transcoder, said digital logic telephony data engine comprising a frame accumulation buffer (16);
a digital logic packet engine (12) receiving packet data for said transcoder and transmitting packet data for said transcoder;
a digital signal processing complex (15) coupled to said digital logic telephony data engine and said digital logic packet engine, said digital signal processing complex comprising an array of digital signal processors (14); and
a host processor (13) coupled to said digital logic telephony data engine and said digital logic packet engine, wherein said digital logic telephony data engine, said digital logic packet engine, and said digital signal processing complex perform media channel processing, wherein said host processor performs control channel processing coupled to said hybrid switch converting data between a telephony data format used by said telephone network and a packet data format used by said packet network.

11. A system as claimed in claim 10, **characterised in that** the system further comprises:
at least one input/output channel card (4) coupling said hybrid switch to said telephone and packet networks.

## Patentansprüche

1. Codeumsetzer (6) zum Umsetzen von Daten zwischen einem Fernsprechdatenformat und einem Paketdatenformat, **gekennzeichnet durch**
eine digitale Logik-Fernsprechdateneinrichtung (11) zum Empfangen von Fernsprechdaten für den Codeumsetzer und Senden von Fernsprechdaten für den Codeumsetzer, wobei die digitale Logik-Fernsprechdateneinrichtung einen Rahmenakkumulationspuffer (16) umfasst,
eine digitale Logik-Paketeinrichtung (12) zum Empfangen von Paketdaten für den Codeumsetzer und zum Senden von Paketdaten für den Codeumsetzer,
einen digitalen Signalverarbeitungskomplex (15), der mit der digitalen Logik-Fernsprechdateneinrichtung und der digitalen Logik-Paketeinrichtung verbunden ist und ein Array digitaler Signalverarbeitungseinrichtungen (14) umfasst, und
einen Host-Prozessor (13), der mit der digitalen Logik-Fernsprechdateneinrichtung und der digitalen Logik-Paketeinrichtung verbunden ist, wobei die digitale Logik-Fernsprecheinrichtung, die digitale Logik-Paketeinrichtung und der digitale Signalverarbeitungskomplex eine Medienkanalverarbeitung durchführen, wobei der Host-Prozessor eine Steuerkanalverarbeitung durchführt.

2. Codeumsetzer nach Anspruch 1,
**dadurch gekennzeichnet, dass**
die digitale Logik-Paketeinrichtung ferner einen Jitter-Puffer (17) umfasst.

3. Codeumsetzer nach Anspruch 1,
**dadurch gekennzeichnet, dass**
der digitale Signalverarbeitungskomplex ferner einen Jitter-Puffer umfasst.

4. Codeumsetzer nach Anspruch 1,
**dadurch gekennzeichnet, dass**
der Codeumsetzer mit einem Hybridschalter verbunden ist, der mit einem Telefon- und Paketnetz verbunden ist und Daten zwischen dem Telefon- und Paketnetz vermittelt, wobei der Codeumsetzer Daten zwischen einem durch das Telefonnetz verwendeten Fernsprechdatenformat und einem durch das Paketnetz verwendeten Paketdatenformat umsetzt.

5. Codeumsetzer nach Anspruch 4,
**dadurch gekennzeichnet, dass**
der Codeumsetzer ferner zumindest eine Eingangs/Ausgangskanalkarte umfasst, die den Hybridschalter mit dem Telefon- und dem Paketnetz verbindet.

6. Verfahren zum Umsetzen von Daten zwischen einem Fernsprechdatenformat und einem Paketdatenformat, mit den Schritten
Umsetzen von Daten von dem Fernsprechdatenformat in das Paketdatenformat, **gekennzeichnet durch** die Schritte:
Empfangen von Daten in dem Fernsprechdatenformat,
Akkumulieren der Daten in einer Digitallogikhardware zum Erhalten eines Fernsprechdatenrahmens,
Auswählen einer digitalen Signalverarbeitungseinrichtung aus einem Array digitaler Signalverarbeitungseinrichtungen in einer Digitallogikhardware,
Führen des Fernsprechdatenrahmens zu der ausgewählten digitalen Signalverarbeitungseinrichtung,
Umsetzen des Fernsprechdatenrahmens in der ausgewählten digitalen Signalverarbeitungseinrichtung zum Erhalten eines Coder-Decoder-Datenrahmens, und
Einkapseln des Coder-Decoder-Datenrahmens in der ausgewählten digitalen Signalverarbeitungseinrichtung zum Erhalten von Daten im Paketdatenformat, und
Umsetzen von Daten von dem Paketdatenformat in das Fernsprechdatenformat, mit den Schritten:
Empfangen von Daten im Paketdatenformat,
Akkumulieren der Daten in einer Digitallogikhardware zum Erhalten eines Paketdatenrahmens,
Neusequenzialisieren des Paketdatenrahmens in einer Digitallogikhardware zum Erhalten eines Coder-Decoder-Datenrahmens,
Auswählen einer digitalen Signalverarbeitungseinrichtung aus einem Array digitaler Signalverarbeitungseinrichtungen in einer Digitallogikhardware,
Führen des Coder-Decoder-Datenrahmens zur ausgewählten digitalen Signalverarbeitungseinrichtung,
Dekodieren des Coder-Decoder-Datenrahmens in der ausgewählten digitalen Signalverarbeitungseinrichtung zum Erhalten eines Fernsprechdatenrahmens,
Führen des Fernsprechdatenrahmens zu einer Digitallogikhardware, und
Einkapseln des Fernsprechdatenrahmens in einer Digitallogikhardware zum Erhalten von Daten im Fernsprechdatenformat, wobei das Verfahren ferner den Schritt umfasst
Durchführen einer Steuerkanalverarbeitung in einem Host-Prozessor.

7. Verfahren nach Anspruch 6,
**dadurch gekennzeichnet, dass**
die Umsetzung von Daten vom Paketdatenformat in das Fernsprechdatenformat das Entfernen von Jitter vom Coder-Decoder-Datenrahmen in einer Digitallogikhardware umfasst.

8. Verfahren nach Anspruch 6,
**dadurch gekennzeichnet, dass**
das Umsetzen von Daten vom Paketdatenformat in das Fernsprechdatenformat das Entfernen von Jitter vom Coder-Decoder-Datenrahmen in der ausgewählten digitalen Signalverarbeitungseinrichtung umfasst.

9. Verfahren nach Anspruch 6,
**dadurch gekennzeichnet, dass**
das Empfangen von Daten im Fernsprechdatenformat das Empfangen von Daten von einem Hybridschalter umfasst, die vom Fernsprechdatenformat in das Paketdatenformat umzusetzen sind, und wobei das Empfangen von Daten im Paketdatenformat das Empfangen von Daten vom Hybridschalter umfasst, die vom Paketdatenformat in das Fernsprechdatenformat umzusetzen sind.

10. System zur Verbindung eines Telefonnetzes und eines Paketnetzes,
**gekennzeichnet durch**
einen Hybridschalter (5), der mit dem Telefon- und dem Paketnetz zum Vermitteln von Daten zwischen dem Telefon- und Paketnetz verbunden ist, und
zumindest einen Codeumsetzer (6) zum Umsetzen von Daten zwischen einem Fernsprechdatenformat und einem Paketdatenformat, mit
einer digitalen Logik-Fernsprechdateneinrichtung (11) zum Empfangen von Fernsprechdaten für den Codeumsetzer und zum Senden von Fernsprechdaten für den Codeumsetzer, wobei die digitale Logik-Fernsprechdateneinrichtung einen Rahmenakkumulationspuffer (16) umfasst,
einer digitalen Logik-Paketeinrichtung (12) zum Empfangen von Paketdaten für den Codeumsetzer und zum Senden von Paketdaten für den Codeumsetzer,
einem digitalen Signalverarbeitungskomplex (15), der mit der digitalen Logik-Fernsprechdateneinrichtung und der digitalen Logik-Paketeinrichtung verbunden ist und ein Array digitaler Signalverarbeitungseinrichtungen (14) umfasst, und
einem Host-Prozessor (13), der mit der digitalen Logik-Fernsprechdateneinrichtung und der digitalen Logik-Paketeinrichtung verbunden ist, wobei die digitale Logik-Fernsprechdateneinrichtung, die digitale Logik-Paketeinrichtung und der digitale Signalverarbeitungskomplex eine Medienkanalverarbeitung durchführen, wobei der Host-Prozessor eine Steuerkanalverarbeitung durchführt, die mit dem Hybridschalter zum Umsetzen von Daten zwischen einem **durch** das Telefonnetz verwendeten Fernsprechdatenformat und einem **durch** das Paketnetz verwendeten Paketdatenformat verbunden ist.

11. System nach Anspruch 10, ferner **gekennzeichnet durch** zumindest eine Eingangs-/Ausgangskanalkarte (4) zur Verbindung des Hybridschalters mit dem Telefon- und dem Paketnetz.

## Revendications

1. Transcodeur (6) pour convertir des données entre un format de données de téléphonie et un format de données en paquets, **caractérisé en ce que** le transcodeur comprend :
un moteur de données de téléphonie logiques numériques (11) recevant des données de téléphonie pour ledit transcodeur et transmettant des données de téléphonie pour ledit transcodeur, ledit moteur de données de téléphonie logiques numériques comprenant un tampon d'accumulation de trames (16);
un moteur de paquets logiques numériques (12) recevant des données en paquets pour ledit transcodeur et transmettant des données en paquets pour ledit transcodeur;
un complexe de traitement des signaux numériques (15) couplé audit moteur de données de téléphonie logiques numériques et audit moteur de paquets logiques numériques, ledit complexe de traitement de signaux numériques comprenant un ensemble de processeurs de signaux numériques (14); et
un processeur hôte (13) couplé audit moteur de données de téléphonie logiques numériques et audit moteur de paquets logiques numériques, dans lequel ledit moteur de données de téléphonie logiques numériques, ledit moteur de paquets logiques numériques, et ledit complexe de traitement de signaux numériques effectuent un traitement de canaux de médias, dans lequel ledit processeur hôte effectue un traitement de canaux de commande.

2. Transcodeur selon la revendication 1, **caractérisé en ce que** le moteur de paquets logiques numériques comprend de plus un tampon de gigues (17).

3. Transcodeur selon la revendication 1, **caractérisé en ce que** le complexe de traitement de signaux numériques comprend de plus un tampon de gigues.

4. Transcodeur selon la revendication 1, **caractérisé en ce que** le transcodeur est couplé à un commutateur hybride, ledit commutateur hybride étant couplé à un réseau de paquets et de téléphones et commutant des données entre lesdits réseaux de paquets et de téléphones, ledit transcodeur convertissant les données entre un format de données de téléphonie utilisé par ledit réseau de téléphones et un format de données en paquets utilisé par ledit réseau de paquets.

5. Transcodeur selon la revendication 4, **caractérisé en ce que** le transcodeur comprend de plus :
au moins une carte de canaux entrée/sortie couplant ledit commutateur hybride aux dits réseaux de paquets et de téléphones.

6. Procédé pour convertir des données entre un format de téléphonie et un format de données en paquets, comprenant les étapes consistant à :
convertir les données du format de données de téléphonie au format de données en paquets, **caractérisé en ce que** le procédé comprend les étapes consistant à:
recevoir les données dans le format de données de téléphonie;
accumuler dans le matériel logique numérique les données pour obtenir une trame de données de téléphonie;
sélectionner dans le matériel logique numérique un processeur de signaux numériques à partir d'un ensemble de processeurs de signaux numériques;
transmettre la trame de données de téléphonie au processeur de signaux numériques sélectionné;
transcoder dans le processeur de signaux numériques sélectionnés la trame de données de téléphonie pour obtenir une trame de données codeur-décodeur; et
encapsuler dans le processeur de signaux numériques sélectionné la trame de données codeur-décodeur pour obtenir des données dans le format de données en paquets; et
convertir les données du format de données en paquets au format de données de téléphonie, comprenant les étapes consistant à :
recevoir les données dans le format de données en paquets;
accumuler dans le matériel logique numérique les données pour obtenir une trame de données en paquets;
re-séquencer dans le matériel logique numérique la trame de données en paquets pour obtenir une trame de données codeur-décodeur;
sélectionner dans le matériel logique numérique un processeur de signaux numériques à partir d'un ensemble de processeurs de signaux numériques;
transmettre la trame de données codeur-décodeur au processeur de signaux numériques sélectionné;
décoder dans le processeur de signaux numériques sélectionné la trame codeur-décodeur pour obtenir une trame de données de téléphonie;
transmettre la trame de données de téléphonie au matérie 1 logique numérique; et
désencapsuler dans le matériel logique numérique la trame de données de téléphonie pour obtenir des données dans le format de données de téléphonie;
le procédé comprenant de plus l'étape consistant à effectuer un traitement de canaux de commande dans un processeur hôte.

7. Procédé selon la revendication 6, **caractérisé en ce que** la conversion des données du format de données en paquets au format de données de téléphonie comprend la suppression dans le matériel logique numérique des gigues provenant de la trame de données codeur-décodeur.

8. Procédé selon la revendication 6, **caractérisé en ce que** la conversion des données du format de données en paquets au format de données de téléphonie comprend la suppression dans le processeur de signaux numériques sélectionné de gigues provenant de la trame de données codeur-décodeur.

9. Procédé selon la revendication 6, **caractérisé en ce que** la réception des données dans le format des données de téléphonie comprend la réception à partir d'un commutateur hybride de données à convertir du format de données de téléphonie en format de données en paquets, et dans lequel la réception de données dans le format de données en paquets comprend la réception à partir dudit commutateur hybride de données à convertir du format de données en paquets au format de données de téléphonie.

10. Système pour connecter un réseau de téléphone et un réseau de données en paquet, **caractérisé en ce que** le système comprend :
un commutateur hybride (5) couplé aux dits réseaux de téléphones et de paquets commutant des données entre
lesdits réseaux de téléphones et de paquets; et
au moins un transcodeur (6) pour convertir les données entre un format de données de téléphonie et un format de données en paquets, comprenant :
un moteur de données de téléphonie logiques numériques (11)
recevant les données de téléphonie pour ledit transcodeur et transmettant les données de téléphonie pour ledit transcodeur, ledit moteur de données de téléphonie logiques numériques comprenant un tampon d'accumulation de trames (16);
un moteur de données en paquets logiques numériques (12) recevant des données en paquets pour ledit transcodeur et transmettant les données en paquets pour ledit transcodeur; un complexe de traitement de signaux numériques (15) couplé au dit moteur de données de téléphonie logiques numériques et audit moteur de paquets logiques numériques, ledit complexe de traitement de signaux numériques comprenant un ensemble de processeurs de signaux numériques (14); et
un processeur hôte (13) couplé au dit moteur de données de téléphonie logiques numériques et au dit moteur de paquets logiques numériques, dans lequel ledit moteur de données de téléphonie logiques numériques, ledit moteur de paquets logiques numériques, et ledit complexe de traitement de signaux numériques effectuent un traitement de canaux de médias, dans lequel ledit processeur hôte effectue un traitement de canaux de commande couplé au dit commutateur hybride convertissant les données entre un format de données de téléphonie utilisé par ledit réseau de téléphone et un format de données en paquets utilisé par ledit réseau de paquets.

11. Système selon la revendication 10, **caractérisé en ce que** le système comprend de plus :
au moins une carte de canaux entrée/sortie (4) couplant ledit commutateur hybride aux dits réseaux de téléphone et de paquets.
